# EUROPEAN PATENT SPECIFICATION

(11) **EP 3 471 484 B1**
(45) Date of publication and mention of the grant of the patent: **25.03.2026**
(21) Application number: 17838401.2
(22) Date of filing: 23.05.2017
(51) Int. Cl.: H04W 72/21, H04W 72/566, H04W 72/115

(54) **RESOURCE SCHEDULING METHOD AND DEVICE**
RESSOURCENPLANUNGSVERFAHREN UND -VORRICHTUNG
PROCÉDÉ ET DISPOSITIF DE PLANIFICATION DE RESSOURCE

(30) Priority: 11.08.2016 CN 201610665452
(43) Date of publication of application: 17.04.2019
(73) Proprietor: Huawei Technologies Co., Ltd., Longgang District Shenzhen, Guangdong 518129 (CN)
(72) Inventor: XU, Xiaoying, Shenzhen Guangdong 518129 (CN); ZHENG, Xiaoxiao, Shenzhen Guangdong 518129 (CN); ZENG, Qinghai, Shenzhen Guangdong 518129 (CN); XU, Min, Shenzhen Guangdong 518129 (CN)
(74) Representative: Gill Jennings & Every LLP
(86) International application number: PCT/CN2017/085524
(87) International publication number: WO 2018/028269

(56) References cited:
- EP-A1- 2 667 674
- CN-A- 101 695 194
- CN-A- 101 873 704
- CN-A- 102 036 404
- US-A1- 2007 121 542
- US-A1- 2010 238 875
- US-A1- 2014 254 544
- ERICSSON: "Uu Enhancements for V2X", vol. RAN WG1, no. Busan; 20160411 - 20160415, 1 April 2016 (2016-04-01), XP051079714, Retrieved from the Internet <URL:http://www.3gpp.org/ftp/tsg_ran/WG1_RL1/TSGR1_84b/Docs/> [retrieved on 20160401]
- INSTITUTE FOR INFORMATION INDUSTRY (III): "Discussion on LAA Uplink Channel Access", vol. RAN WG1, no. Busan, Korea; 20160411 - 20160415, 1 April 2016 (2016-04-01), XP051079790, Retrieved from the Internet <URL:http://www.3gpp.org/ftp/tsg_ran/WG1_RL1/TSGR1_84b/Docs/> [retrieved on 20160401]

## Description

### TECHNICAL FIELD

The present disclosure relates to the communications field, and in particular, to resource scheduling methods, a terminal and a base station.

### BACKGROUND

A next generation mobile network (Next Generation Mobile Network, NGMN), such as a future 5G mobile communications system, needs to support a conventional mobile broadband (Mobile Broad Band, MBB) service, and further needs to support various using services having different requirements. The NGMN roughly divides future services into an evolved MBB (evolved MBB, eMBB) service, a massive machine type communication (massive Machine Type Communication, mMTC) service, and an ultra-reliable and low latency communications (Ultra Reliable and Low Latency Communications, URLLC) service. These services impose different requirements on a network. For example, the eMBB service requires the network to provide high bandwidth and a low latency; the mMTC service is insensitive to a latency, but requires the network to provide an extra-large quantity of connections; and the URLLC service requires the network to provide extremely high reliability and an extremely low end-to-end latency, and an uplink sending latency requirement for the URLLC service is 0.5 ms according to a latency requirement of next-generation wireless communication.

In a current Long Term Evolution (Long Term Evolution, LTE) system, when a terminal (User equipment, UE) is in a connected mode and has no uplink grant, the terminal first sends a scheduling request (scheduling Request, SR) on a physical uplink control channel (Physical Uplink Control Channel, PUCCH), to request a base station to allocate a small quantity of resources. After obtaining the uplink grant, the terminal sends a buffer status report (Buffer Status Report, BSR), and the BSR includes a logical channel and a requested data buffer size. The base station allocates an uplink grant based on a priority of the logical channel and the requested data buffer size in the BSR, and the UE sends data after obtaining the uplink grant. Based on a current TTI (Transmission Time Interval) of 1 ms, a scheduling request process of SR+BSR requires approximately 15 ms. If the TTI is reduced to 0.1 ms, a sending latency is approximately 2 ms when there is no retransmission. Therefore, a sending latency requirement of a future service cannot be met.

ERICSSON: "Uu Enhancements for V2X", 3GPP DRAFT; R1-162831 - UU ENHANCEMENTS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Busan; 20160411 - 20160415 1 April 2016 discusses enhancements to the Uu cellular interface with focus on V2X applications.

INSTITUTE FOR INFORMATION INDUSTRY (Ill): "Discussion on LAA Uplink Channel Access", 3GPP DRAFT; R1-163191 DISCUSSION ON LAA UPLINK CHANNEL ACCESSR_R1, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRAN vol. RAN WG1, no. Busan, Korea; 20160411 - 20160415 1 April 2016 discusses LAA uplink channel access.

### SUMMARY

Aspects of the present disclosure provide resource scheduling methods, a terminal and a base station, so as to reduce a sending latency of resource scheduling to meet a sending latency requirement of a future service.

The invention has been defined in the independent claims. Further specific technical features have been defined in the dependent claims.

### BRIEF DESCRIPTION OF DRAWINGS

FIG. 1 is an architectural diagram of an LTE system;
FIG. 2 is a flowchart of a resource scheduling method according to an aspect of the present disclosure;
FIG. 3 is a schematic structural diagram of a resource scheduling apparatus according to an aspect of the present disclosure;
FIG. 4 is a schematic structural diagram of a terminal device according to an aspect of the present disclosure;
FIG. 5 is a schematic structural diagram of a resource scheduling apparatus according to an aspect of the present disclosure;
FIG. 6 is a schematic structural diagram of a network device according to an aspect of the present disclosure.
FIG. 7 is a schematic structural diagram of a terminal according to an aspect of the present disclosure; and
FIG. 8 is a schematic structural diagram of a base station according to an aspect of the present disclosure.

### DESCRIPTION OF ASPECTS

To make the objectives, technical solutions, and advantages of this disclosure clearer, the following further describes the implementations of this disclosure in detail with reference to the accompanying drawings. The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

It should be understood that in the aspects of the present disclosure, a terminal (Terminal) may be referred to as user equipment (English: User Equipment, UE for short), a mobile station (English: Mobile Station, MS for short), a mobile terminal (Mobile Terminal), or the like. The terminal may communicate with one or more core network devices through a radio access network (English: Radio Access Network, RAN for short), for example, the terminal may be a mobile phone (alternatively referred to as a "cellular" phone) or a computer with a mobile terminal, for example, the terminal may further be a portable, pocket-sized, handhold, computer built-in, or in-vehicle mobile apparatus, which exchanges voice and/or data with the radio access network.

It should be understood that in the aspects of the present disclosure, a base station may be alternatively referred to as a radio access network (Radio Access Network, RAN) device, which is a device that connects the terminal and a wireless network, and includes but is not limited to an evolved NodeB (evolved NodeB, eNB), a radio network controller (radio network controller, RNC), a NodeB (NodeB, NB), a base station controller (Base Station Controller, BSC), a base transceiver station (Base Transceiver Station, BTS), a home eNodeB (for example, Home evolved NodeB or Home NodeB, HNB), a baseband unit (BaseBand Unit, BBU), a WiFi access point (Access Point, AP), or the like.

It should be further understood that the technical solutions provided in the aspects of the present disclosure may be applied to various communications systems, such as a global system for mobile communications (English: Global System of Mobile communication, GSM for short), a Code Division Multiple Access (English: Code Division Multiple Access, CDMA for short) system, a Wideband Code Division Multiple Access (English: Wideband Code Division Multiple Access, WCDMA for short) system, a general packet radio service (English: General Packet Radio Service, GPRS for short) system, a Long Term Evolution (English: Long Term Evolution, LTE for short) system, and a future evolved system, such as a 5G system.

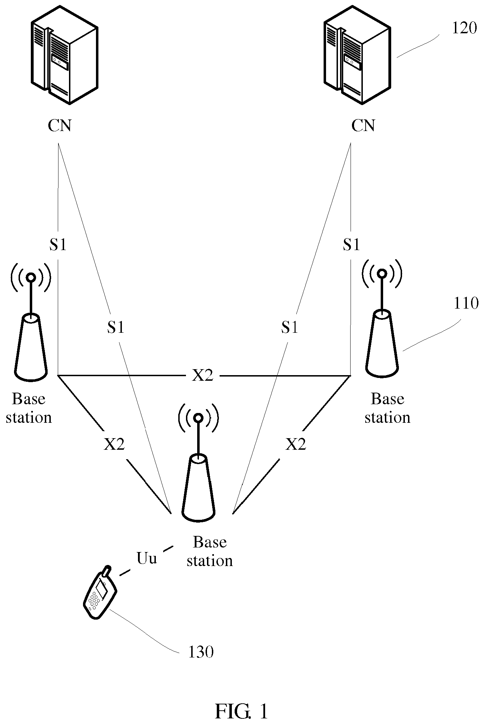

In the aspects of the present disclosure, that the technical solutions are applied to the LTE system is used as an example for description. FIG. 1 is an architectural diagram of an LTE system. The LTE system includes base stations 110, core network (Core Network, CN) devices 120, and a terminal 130. The terminal 130 accesses a wireless network by using the base station 110, and communication between the terminal 130 and an external network is implemented by using the CN device 120. In the system, the base stations 110 may exchange information. For example, in a Long Term Evolution (Long Term Evolution, LTE) system, an interface between the base stations is referred to as an X2 interface, and the base stations 110 may exchange information by using the X2 interface. In addition, an interface between the base station 110 and the terminal 130 is referred to as a Uu interface, or referred to as an air interface, and the base station 110 communicates with the terminal 130 by using the air interface. An interface between the base station 110 and the CN device 120 is referred to as an S1 interface, and the base station 110 communicates with the CN device 120 by using the S1 interface. The CN device 120 may include a mobility management entity (Mobility Management Entity, MME) and a serving gateway (Serving Gateway, S-GW). The base station 110 and the S-GW exchange user-plane information, and the base station 110 and the MME exchange control-plane information. Details are not described herein.

The aspects of the present disclosure provide a resource scheduling method and apparatus, so as to reduce a sending latency of resource scheduling to meet a sending latency requirement of a future service. The method and the apparatus are based on a same inventive concept. Because a problem-resolving principle of the method is similar to that of the apparatus, mutual reference may be made between implementation of the apparatus and implementation of the method, and no repeated description is provided.

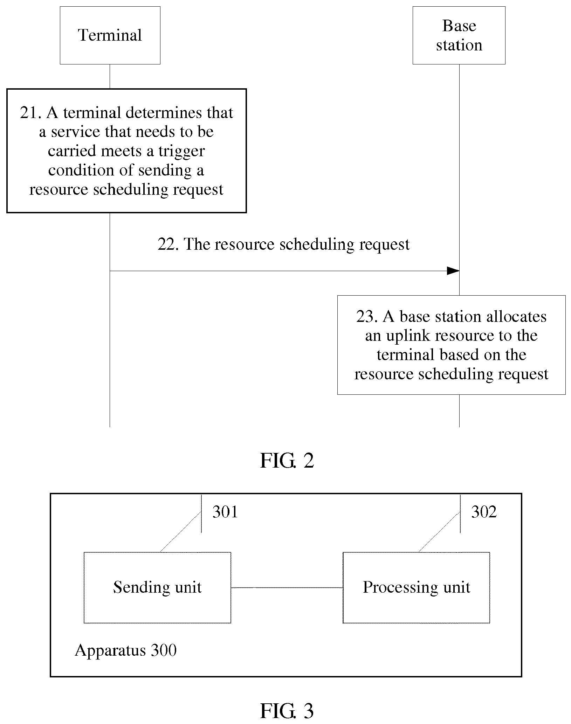

Based on the network architecture shown in FIG. 1, referring to FIG. 2, an aspect of the present disclosure provides a resource scheduling method, and a specific procedure includes the following steps.

Step 21: A terminal determines that a service that needs to be carried meets a trigger condition of sending a resource scheduling request.

Further, before the terminal determines that the service that needs to be carried meets the trigger condition of sending the resource scheduling request, an application manner of the resource scheduling request further needs to be configured in the method, and specifically includes the following two manners:
Manner 1: When determining that data of the service is carried on a pre-agreed logical channel, slice, or IP flow, the terminal can further determine whether the service meets the trigger condition of sending the resource scheduling request.
Manner 2: When determining that data of the service is carried on a logical channel, a slice, or an IP flow that is configured on a network side, the terminal can further determine whether the service meets the trigger condition of sending the resource scheduling request. In this case, the configuration on the network side may be performed on a per-terminal basis, and the terminal may be configured, by using dedicated or common signaling, with the logical channel, the slice, or the IP flow that is configured on the network side.

Specifically, the determining, by a terminal, that a service that needs to be carried meets a trigger condition of resource scheduling includes any one of the following cases:
Case 1: When a data buffer size is empty, and new data of the service arrives, the terminal determines that the trigger condition of the resource scheduling request is met.
Case 2: When data that is of the service and that is carried on a channel, a slice, or an IP flow whose priority indication meets a preset condition arrives, the terminal determines that the trigger condition of the resource scheduling request is met.
Case 3: When determining that a service data volume of a service that is in the service and that is carried on a channel, a slice, or an IP flow whose priority indication meets a preset condition is greater than a preset first threshold, the terminal determines that the trigger condition of the resource scheduling request is met.
Case 4: When determining that a service data volume of the service is greater than a preset second threshold, the terminal determines that the trigger condition of the resource scheduling request is met.
Case 5: When determining that a service data volume of a scheduling-free service in the service is greater than a preset third threshold, the terminal determines that the trigger condition of the resource scheduling request is met.

It should be noted that a priority includes a plurality of levels, for example, a high priority and a low priority. A priority indication of the high priority is represented by 1, and a priority indication of the low priority is represented by 0. That the priority indication meets the preset condition in Case 2 or Case 3 is the case of the high priority whose priority indication is 1.

It should be noted that in this aspect of the present disclosure, a network does not need to allocate a resource before data of the scheduling-free service is sent. When the terminal is in a connected mode, the terminal obtains one resource or one group of resources that are pre-configured by the network, and when service data needs to be sent, the terminal directly uses the one resource or the one group of resources that are configured by the network. When the terminal is in an idle mode, the terminal obtains a scheduling-free resource indicated in a broadcast message, and directly uses the scheduling-free resource when service data needs to be sent.

Case 6: When determining that a data buffer size of a scheduling-based service in the service is greater than a preset third threshold, the terminal determines that the trigger condition of the resource scheduling request is met.

Case 7: When determining that a quantity of times that a scheduling-free service in the service fails to be sent is greater than a preset fourth threshold, the terminal determines that the trigger condition of the resource scheduling request is met.

Step 22: The terminal sends the resource scheduling request to a base station, where the resource scheduling request is used to request the base station to allocate an uplink resource to the terminal, and the resource scheduling request includes at least any one of a priority indication of the service, a scheduling-free sending indication, a scheduling-free sending failure indication, a semi-persistent resource request, and a data buffer size indication.

The semi-persistent resource request includes service bearer information or a semi-persistent resource request instruction that is used to instruct the base station to allocate a semi-persistent resource.

The data buffer size indication is used to describe whether a data buffer size of the service is greater than/less than a threshold.

The scheduling-free sending indication includes resource information used to indicate that the terminal performs scheduling-free sending.

Optionally, in a possible implementation, the resource scheduling request includes the priority indication of the service and any one or any combination of the scheduling-free sending indication, the scheduling-free sending failure indication, and the data buffer size indication. In this case, the resource scheduling request is used to request the base station to allocate an uplink licensed resource to the terminal.

Optionally, in another possible implementation, the resource scheduling request includes the semi-persistent resource request and any one or a combination of the priority indication of the service and the data buffer size indication. In this case, the resource scheduling request is used to request the base station to allocate an uplink semi-persistent resource to the terminal.

In addition, each indication is represented by one bit. In the priority indication of the service, if the bit is 1, it indicates that a service of a high priority is included; or if the bit is 0, it indicates that a service of a high priority is not included. Optionally, a service bearer is a high priority bearer, and the service may be corresponding to one IP flow. If the bit is 1, it indicates that a service on a high priority slice (slice) is included. Optionally, different slices may represent that different physical layer frame structures or different transmission time intervals (Transmission Time Interval, TTI) are used. In the scheduling-free sending indication, if the bit is 1, it indicates that a scheduling-free (grant free) service is included; or if the bit is 0, it indicates that a scheduling-free service is not included. In the data buffer size indication, if the bit is 1, it indicates that the data buffer size of the service is greater than a threshold; or if the bit is 0, it indicates that the data buffer size of the service is lower than a threshold.

For example, two bits are used to indicate the priority indication of the service, and two bits are used to indicate the scheduling-free sending indication. One bit indicates whether there is a service on a high-priority logical channel, slice, or IP flow, and the other bit is used to indicate whether there is a service on a low-priority logical channel, slice, or IP flow. One bit indicates that there is a scheduling-free service, and the other bit indicates that there is a scheduling-based service.

Step 23: The base station allocates the uplink resource to the terminal based on the resource scheduling request.

Specifically, when the base station allocates the uplink resource to the terminal based on the resource scheduling request, in a possible implementation,
the base station allocates a corresponding uplink grant to the terminal based on the scheduling-free sending indication, the scheduling-free sending failure indication, or the data buffer size indication in the resource scheduling request. For example, the resource scheduling request includes the data buffer size indication, and when the data buffer size of the service is lower than a threshold, a grant A is allocated, or when the data buffer size of the service is higher than a threshold, a grant B is allocated. For example, the grant A can enable the terminal to send one BSR/one power headroom report (Power Head Room, PHR) and data with a size of one small transport block (Transport Block, TB); or the grant A can enable the terminal to send data with a size of one small transport block. The size of one small transport block may be agreed on in advance or may be configured by the network. The grant B can enable the terminal to send data with a size of one big transport block, and the size of one big transport block may be agreed on in advance or may be configured by the network.

According to the claimed invention, when an unlicensed (unlicensed) spectrum is introduced into a secondary component carrier to perform sending by using the secondary component carrier assisted by a primary component carrier, UE 1 needs to send a resource scheduling request on the primary component carrier when directly sending data on the secondary component carrier in a scheduling-free manner. A scheduling-free sending indication in the resource scheduling request includes resource information used to indicate that the UE 1 performs scheduling-free sending, that is, a frequency and a resource that are used to indicate, on the primary component carrier, that the UE 1 performs scheduling-free sending, so that the base station can determine, based on the information, whether a plurality of UEs simultaneously send data on a same resource of a carrier. When the base station determines that another UE and the UE 1 simultaneously send data on the same resource, the base station performs resource allocation and scheduling for the UE 1 or the another UE, so as to improve resource sending efficiency. Optionally, if the base station correctly receives data of one UE in the plurality of UEs, the base station uses a scheduling manner or continues to use a scheduling-free manner to perform resource allocation and scheduling for other UEs; or if the base station does not correctly receive data of any UE, the base station uses a scheduling manner or continues to use a scheduling-free manner to perform resource allocation and scheduling for the UE 1 and/or other UEs.

In this case, the UE sends the resource scheduling request on a primary component carrier of a licensed spectrum, and directly sends data on a secondary component carrier of an unlicensed spectrum in a scheduling-free manner, so that the base station determines whether there is a resource conflict, and performs resource allocation and scheduling. The resource scheduling request and the data may be simultaneously sent. In this case, when receiving the resource scheduling request, the base station determines whether the data of the UE is received, and determines whether there is a conflict among a plurality of UEs. Optionally, the resource scheduling request may be sent before the data is sent. In this case, after receiving the resource scheduling request, the base station determines, after waiting for a time period, whether the data of the UE is received. The time period may be one or more LBT periods. Optionally, the resource scheduling request may alternatively be sent after the data is sent. In this case, after receiving the resource scheduling request, the base station determines whether the data of the UE is received before the resource scheduling request is received.

For example, in a standalone scenario, the UE sends the resource scheduling request on a preconfigured resource and frequency at a fixed moment in a time period, after LBT, in which a resource is allowed to be occupied for sending data (for example, a first timeslot or a last timeslot before the data is sent, or a preconfigured time period). The scheduling-free sending indication in the resource scheduling request includes the resource information that is used to instruct the UE to perform scheduling-free sending, and the resource information may be resource information selected by the UE or a number of a scheduling-free resource, so that the base station determines whether a resource conflict occurs, and performs resource allocation and scheduling, a data transmission latency on the unlicensed spectrum is reduced, and spectrum usage is improved. For example, according to a WLAN stipulation, the UE may occupy a spectrum for 10 ms to send the data, and it may be specified that the resource scheduling request instead of the data is sent by using the preconfigured resource at a specific moment in the 10 ms. Therefore, after simultaneously preempting the resource, the plurality of UEs send no data at the same time, but send resource scheduling requests by using resources that are not in conflict with each other, so as to ensure that the network can receive a related resource scheduling request.

Optionally, the scheduling-free sending indication may further include an SR, a BSR, information indicating that the terminal sends a related data transmission request on a preconfigured dedicated resource, a UE ID, a data volume that needs to be sent, and the like. The resource and the frequency that are occupied for sending the resource scheduling request are independently configured for each UE, so as to possibly ensure that no conflict occurs among UEs, or reduce a conflict probability. Therefore, when two or more UEs simultaneously send, after LBT, data by using a same scheduling-free resource, it may be ensured that resource indication information may be simultaneously sent at a fixed time (which is preconfigured by the base station by using a system message or in another manner), so that no conflict between uplink resources indicated in the resource indication information occurs.

When two UEs simultaneously send data by using a same scheduling-free resource, and a conflict occurs during data sending, it may be ensured that the base station receives a scheduling-free sending indication, so as to perform resource allocation and scheduling for data transmission. For example, the base station allocates a licensed resource to the UE based on an SR in the scheduling-free sending indication, and the UE sends data based on the licensed resource after LBT. If there is no conflict, or the base station correctly receives data of one UE, after the data of the UE is transmitted, the base station does not need to perform resource allocation and scheduling for the data transmission, but only needs to send an ACK/NACK response based on a requirement.

It should be noted that the standalone scenario is a scenario in which a base station or an access point in 3GPP and a station in WLAN use a same spectrum resource (a same frequency or a same frequency band, or an unlicensed spectrum), and the base station works only on the same spectrum as the station in the WLAN, that is, none of cells controlled by the base station work on a frequency at which only a 3GPP cell is disposed. The cell controlled by the base station is a primary cell, and system information and another uplink or downlink control channel, including a feedback channel used after the UE receives downlink data, need to be sent in the cell. A data request and the like that need to be sent when the UE performs uplink scheduling need to be sent in the cell. For such system, sending is performed based on a TDD mode. To be specific, uplink data or downlink data can be sent in only a specific subframe.

When the base station allocates the uplink resource to the terminal based on the resource scheduling request, in a possible implementation, the base station determines a latency of the uplink grant based on the priority indication in the resource scheduling request. For example, for a service of a high priority, the base station allocates the uplink grant in a subframe or a symbol later, by N subframes or symbols, than a subframe or a symbol in which the resource scheduling request is received; and for a service of a low priority, the base station allocates the uplink grant in a subframe or a symbol later, by M subframes or symbols, than a subframe or a symbol in which the resource scheduling request is received. Values of N and M may be configured by the network or agreed on in a protocol, M is greater than or equal to N, and M and N are integers.

When the base station allocates the uplink resource to the terminal based on the resource scheduling request, in a possible implementation, when determining that the service bearer information in the resource scheduling request meets a preset condition, the base station allocates a semi-persistent resource to the terminal. In this case, a lifecycle of the semi-persistent resource and a radio network temporary identifier used for semi-persistent scheduling are agreed on in advance. Optionally, the resource scheduling request may further include the priority indication of the service and the data buffer size indication. The base station determines a latency of the semi-persistent resource based on the priority indication, and a higher priority indicates a smaller latency; and the base station determines a size of the semi-persistent resource based on the data buffer size indication.

When the base station allocates the uplink resource to the terminal based on the resource scheduling request, in a possible implementation, when determining that the resource scheduling request includes the semi-persistent resource request instruction that instructs the base station to allocate the semi-persistent resource, the base station allocates the semi-persistent resource to the terminal. In this case, a lifecycle of the semi-persistent resource and a radio network temporary identifier used for semi-persistent scheduling are agreed on in advance. Optionally, the resource scheduling request may further include the priority indication of the service and the data buffer size indication. The base station determines a latency of the semi-persistent resource based on the priority indication, and a higher priority indicates a smaller latency; and the base station determines a size of the semi-persistent resource based on the data buffer size indication.

Specifically, after the base station allocates the semi-persistent resource to the terminal, the method further includes:
when the base station detects that the service bearer information of the terminal does not meet the preset condition, actively releasing, by the base station, the semi-persistent resource, or instructing the terminal to release the semi-persistent resource.

After the base station allocates the semi-persistent resource to the terminal, when a service subsequently sent by the terminal is not carried on a specific logical channel, slice, or IP flow, the base station may actively release the semi-persistent resource, or instruct the terminal to release the semi-persistent resource.

Specifically, if the base station actively releases the semi-persistent resource, the terminal cannot initiate, within a time period after the semi-persistent resource is released, a resource scheduling request for requesting the semi-persistent resource.

Specifically, if the base station instructs the terminal to release the semi-persistent resource, the base station sends a release instruction to the terminal, the terminal enables a timer after receiving the release instruction, and before the timer expires, the terminal cannot initiate a resource scheduling request for requesting the semi-persistent resource. Even if the resource scheduling request for requesting the semi-persistent resource is initiated, the base station does not allocate a semi-persistent resource to the terminal.

In addition, after the base station allocates the semi-persistent resource to the terminal, generally, the base station does not release the semi-persistent resource by using explicit signaling, but releases the semi-persistent resource in an implicit manner. To be specific, the semi-persistent resource is released in an implicit manner when no data is transmitted between the terminal and the base station on the semi-persistent resource for a time period.

A lifecycle or a quantity of using times of the semi-persistent resource may be configured by default or preconfigured on the network side, and the semi-persistent resource is an uplink resource and/or a downlink resource. When the lifecycle of the semi-persistent resource is one TTI, the terminal may continuously use a persistent resource.

Optionally, after allocating the uplink resource to the terminal, the base station sends indication information of the resource to the terminal, and the indication information is used to indicate a type of the resource, a size of a corresponding time-frequency resource block, a frequency band or a frequency of the resource, or an identifier of a resource pool. In a design, low-latency and high-reliability resources are in a same resource pool, resources that support a high rate and large bandwidth are in a same resource pool, and resources that support non-emergency small-sized traffic sending are in a same resource pool.

It should be understood that, although the LTE system is used as an example in the foregoing aspects, the foregoing aspects may be applied to another communications system, and the communications system supports information exchange between base stations.

Based on the resource scheduling method provided in the foregoing aspect, referring to FIG. 3, an aspect of the present disclosure provides a resource apparatus 300, and the apparatus 300 is applied to a terminal. FIG. 3 is a schematic structural diagram of the apparatus 300 according to this aspect of the present disclosure. As shown in FIG. 3, the apparatus 300 includes a sending unit 301 and a processing unit 302.

The processing unit 302 is configured to determine that a service that needs to be carried meets a trigger condition of sending a resource scheduling request.

The sending unit 301 is configured to send the resource scheduling request to a base station, where the resource scheduling request is used to request the base station to allocate an uplink resource to the terminal, and the resource scheduling request includes at least one of a priority indication of the service, a scheduling-free sending indication, a scheduling-free sending failure indication, a semi-persistent resource request, and a data buffer size indication.

Optionally, when determining that the service that needs to be carried meets the trigger condition of resource scheduling, the processing unit 302 is specifically configured to:
when a data buffer size is empty, and new data of the service arrives, determine that the trigger condition of the resource scheduling request is met; or
when data that is of the service and that is carried on a channel, a slice, or an IP flow whose priority indication meets a preset condition arrives, determine that the trigger condition of the resource scheduling request is met; or
when determining that a service data volume of a service that is in the service and that is carried on a channel, a slice, or an IP flow whose priority indication meets a preset condition is greater than a preset first threshold, determine that the trigger condition of the resource scheduling request is met; or
when determining that a service data volume of the service is greater than a preset second threshold, determine that the trigger condition of the resource scheduling request is met; or
when determining that a service data volume of a scheduling-free service in the service is greater than a preset third threshold, determine that the trigger condition of the resource scheduling request is met; or
when determining that a data buffer size of a scheduling-based service in the service is greater than a preset third threshold, determine that the trigger condition of the resource scheduling request is met; or
when determining that a quantity of times that a scheduling-free service in the service fails to be sent is greater than a preset fourth threshold, determine that the trigger condition of the resource scheduling request is met.

Optionally, the semi-persistent resource request includes service bearer information or a semi-persistent resource request instruction that is used to instruct the base station to allocate a semi-persistent resource.

Optionally, the scheduling-free sending indication includes resource information used to indicate that the terminal performs scheduling-free sending.

Optionally, the processing unit 302 is further configured to: before determining that the service that needs to be carried meets the trigger condition of sending the resource scheduling request, determine that data of the service is carried on a pre-agreed logical channel, a specified slice, or a specified IP flow; or determine that data of the service is carried on a logical channel configured on a network side, a specified slice, or a specified IP flow.

It should be understood that division of the units in the foregoing apparatus 300 is merely logical function division. In actual implementation, all or some of the units may be integrated into one physical entity, or the units may be physically separated. For example, the foregoing units may be separately disposed processing elements, or may be integrated into a chip of the terminal for implementation, or may be stored in a memory element of the base station in a form of program code and invoked by a processing element of the terminal to implement functions of the foregoing units. In addition, the units may be integrated or may be implemented separately. The processing element may be an integrated circuit chip and has a signal processing capability. In an implementation process, the steps of the foregoing methods or the foregoing units may be performed by an integrated logical circuit in the form of hardware in a processor element or by an instruction in a form of software in a processor element. The processing element may be a general purpose processor, for example, a central processing unit (Central Processing Unit, CPU), or may be configured as one or more integrated circuits that perform the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA), or the like.

It should be noted that, for a function implementation and an interaction manner of each unit in the apparatus 300 in this aspect of the present disclosure, further refer to descriptions in a related method aspect. Details are not described herein.

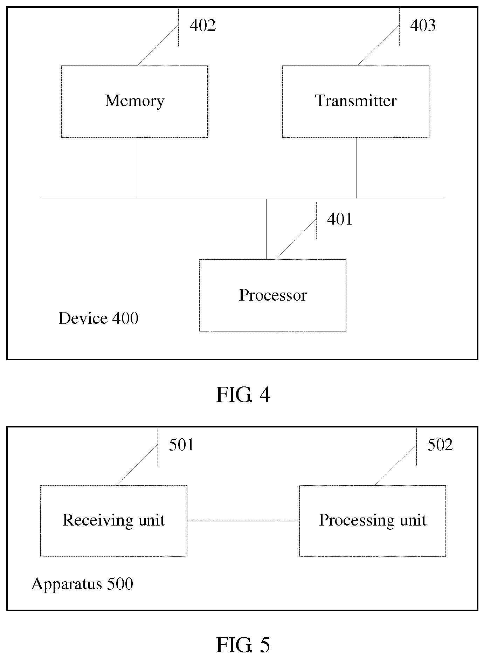

An aspect of the present disclosure further provides a device 400, and the device 400 may be a terminal or another device located on the terminal. FIG. 4 is a schematic structural diagram of the device 400 according to this aspect of the present disclosure. As shown in FIG. 4, the device 400 includes a processor 401, a memory 402, and a transmitter 403. Program code that is used to execute the solutions of the present disclosure is stored in the memory 402, and is controlled by the processor 401 for execution.

A program that is stored in the memory 402 is used to instruct the processor 401 to perform a resource scheduling method, including: determining a service that needs to be carried meets a trigger condition of sending a resource scheduling request; and sending the resource scheduling request to a base station by using the transmitter 403, where the resource scheduling request is used to request the base station to allocate an uplink resource to the terminal, and the resource scheduling request includes at least one of a priority indication of the service, a scheduling-free sending indication, a scheduling-free sending failure indication, a semi-persistent resource request, and a data buffer size indication.

Optionally, when determining that the service that needs to be carried meets the trigger condition of resource scheduling, the processor 401 is specifically configured to:
when a data buffer size is empty, and new data of the service arrives, determine that the trigger condition of the resource scheduling request is met; or
when data that is of the service and that is carried on a channel, a slice, or an IP flow whose priority indication meets a preset condition arrives, determine that the trigger condition of the resource scheduling request is met; or
when determining that a service data volume of a service that is in the service and that is carried on a channel, a slice, or an IP flow whose priority indication meets a preset condition is greater than a preset first threshold, determine that the trigger condition of the resource scheduling request is met; or
when determining that a service data volume of the service is greater than a preset second threshold, determine that the trigger condition of the resource scheduling request is met; or
when determining that a service data volume of a scheduling-free service in the service is greater than a preset third threshold, determine that the trigger condition of the resource scheduling request is met; or
when determining that a data buffer size of a scheduling-based service in the service is greater than a preset third threshold, determine that the trigger condition of the resource scheduling request is met; or
when determining that a quantity of times that a scheduling-free service in the service fails to be sent is greater than a preset fourth threshold, determine that the trigger condition of the resource scheduling request is met.

Optionally, the semi-persistent resource request includes service bearer information or a semi-persistent resource request instruction that is used to instruct the base station to allocate a semi-persistent resource.

Optionally, the scheduling-free sending indication includes resource information used to indicate that the terminal performs scheduling-free sending.

Optionally, the processor 401 is further configured to: before determining that the service that needs to be carried meets the trigger condition of sending the resource scheduling request, determine that data of the service is carried on a pre-agreed logical channel, a specified slice, or a specified IP flow; or determine that data of the service is carried on a logical channel configured on a network side, a specified slice, or a specified IP flow.

It can be understood that the device 400 in this aspect may be configured to implement all functions of the terminal involved in the foregoing method aspect. For a specific implementation process, refer to the related description of the method executed by the terminal in the foregoing method aspect. Details are not described herein.

Based on the resource scheduling method provided in the foregoing aspect, referring to FIG. 5, an aspect of the present disclosure provides a resource apparatus 500, and the apparatus 500 is applied to a base station. FIG. 5 is a schematic structural diagram of the apparatus 500 according to this aspect of the present disclosure. As shown in FIG. 5, the apparatus 500 includes a receiving unit 501 and a processing unit 502.

The receiving unit 501 is configured to receive a resource scheduling request sent by a terminal, where the resource scheduling request is used to request the base station to allocate an uplink resource to the terminal, and the resource scheduling request includes at least one of a priority indication of the service, a scheduling-free sending indication, a scheduling-free sending failure indication, a semi-persistent resource request, and a data buffer size indication.

The processing unit 502 is configured to allocate the uplink resource to the terminal based on the resource scheduling request.

Optionally, the semi-persistent resource request includes service bearer information or a semi-persistent resource request instruction that is used to instruct the base station to allocate a semi-persistent resource.

Optionally, when allocating the uplink resource to the terminal based on the resource scheduling request, the processing unit 502 is specifically configured to:
allocate a corresponding uplink grant to the terminal based on the scheduling-free sending indication, the scheduling-free sending failure indication, or the data buffer size indication in the resource scheduling request; and
determine a latency of the uplink grant based on the priority indication in the resource scheduling request.

Optionally, when allocating the uplink resource to the terminal based on the resource scheduling request, the processing unit 502 is specifically configured to:
when determining that the service bearer information in the resource scheduling request meets a preset condition, allocate the semi-persistent resource to the terminal; or
when determining that the resource scheduling request includes the semi-persistent resource request instruction that instructs the base station to allocate the semi-persistent resource, allocate the semi-persistent resource to the terminal.

Optionally, the processing unit 502 is further configured to: after the semi-persistent resource is allocated to the terminal, and when it is detected that the service bearer information of the terminal does not meet the preset condition, actively release, by the base station, the semi-persistent resource, or instruct the terminal to release the semi-persistent resource.

It should be understood that division of the units in the foregoing apparatus 500 is merely logical function division. In actual implementation, all or some of the units may be integrated into one physical entity, or the units may be physically separated. For example, the foregoing units may be separately disposed processing elements, or may be integrated into a chip of the base station for implementation, or may be stored in a memory element of the base station in a form of program code and invoked by a processing element of the base station to implement functions of the foregoing units. In addition, the units may be integrated or may be implemented separately. The processing element may be an integrated circuit chip and has a signal processing capability. In an implementation process, the steps of the foregoing methods or the foregoing units may be performed by an integrated logical circuit in the form of hardware in a processor element or by an instruction in a form of software in a processor element. The processing element may be a general purpose processor, for example, a central processing unit (Central Processing Unit, CPU), or may be configured as one or more integrated circuits that perform the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA), or the like.

It should be noted that, for a function implementation and an interaction manner of each unit in the apparatus 500 in this aspect of the present disclosure, further refer to descriptions in a related method aspect. Details are not described herein.

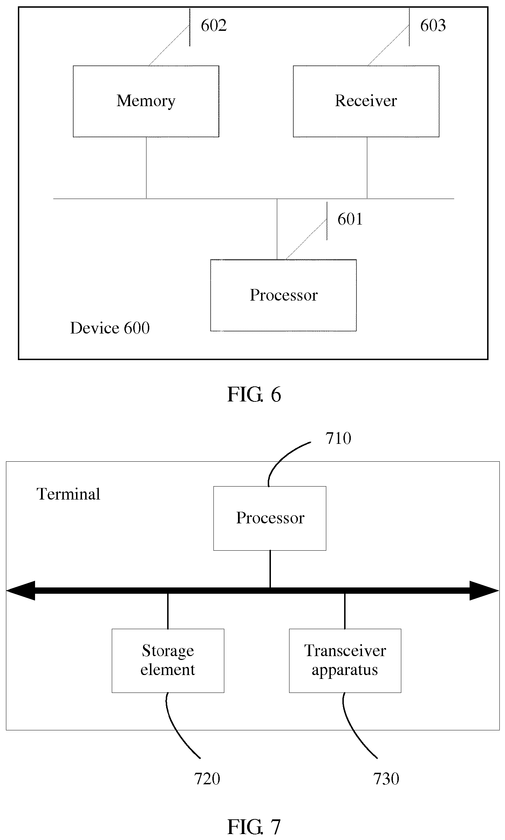

An aspect of the present disclosure further provides a device 600, and the device 600 may be a base station or another device located on the base station. FIG. 6 is a schematic structural diagram of the device 600 according to this aspect of the present disclosure. As shown in FIG. 6, the device 600 includes a processor 601, a memory 602, and a receiver 603. Program code that is used to execute the solutions of the present disclosure is stored in the memory 602, and is controlled by the processor 601 for execution.

A program that is stored in the memory 602 is used to instruct the processor 601 to perform a resource scheduling method, including: receiving, by using the receiver 603, a resource scheduling request sent by a terminal, where the resource scheduling request is used to request the base station to allocate an uplink resource to the terminal, and the resource scheduling request includes at least one of a priority indication of the service, a scheduling-free sending indication, a scheduling-free sending failure indication, a semi-persistent resource request, and a data buffer size indication; and allocating the uplink resource to the terminal based on the resource scheduling request.

Optionally, the semi-persistent resource request includes service bearer information or a semi-persistent resource request instruction that is used to instruct the base station to allocate a semi-persistent resource.

Optionally, when allocating the uplink resource to the terminal based on the resource scheduling request, the processor 601 is specifically configured to: allocate a corresponding uplink grant to the terminal based on the scheduling-free sending indication, the scheduling-free sending failure indication, or the data buffer size indication in the resource scheduling request; and determine a latency of the uplink grant based on the priority indication in the resource scheduling request.

Optionally, when allocating the uplink resource to the terminal based on the resource scheduling request, the processor 601 is specifically configured to: when determining that the service bearer information in the resource scheduling request meets a preset condition, allocate the semi-persistent resource to the terminal; or when determining that the resource scheduling request includes the semi-persistent resource request instruction that instructs the base station to allocate the semi-persistent resource, allocate the semi-persistent resource to the terminal.

Optionally, the processor 601 is further configured to: after the semi-persistent resource is allocated to the terminal, and when it is detected that the service bearer information of the terminal does not meet the preset condition, actively release, by the base station, the semi-persistent resource, or instruct the terminal to release the semi-persistent resource.

It can be understood that the processor involved in the device 400 and the device 600 in the aspects of the present disclosure may be a general purpose central processing unit (CPU), a microprocessor, an application-specific integrated circuit application-specific integrated circuit (ASIC), or one or more integrated circuits configured to control program execution in the solutions of the present disclosure. One or more memories included in a computer system may be a read-only memory read-only memory (ROM) or a static storage device of another type, which is capable of storing static information and a static instruction, a random access memory random access memory (RAM) or a dynamic storage device of another type, which is capable of storing information and an instruction, or may be a magnetic disk memory. The memories are connected to the processor by using a bus.

Functions of the receiver and the transmitter may be implemented by using a transceiver, and the transceiver may be an entity module that is capable of implementing a transceiver function, so as to communicate with another device or another communications network.

The memory, for example, the RAM, stores an operating system and a program used to execute the solutions of the present disclosure. The operating system is a program that is used to control operating of another program and manage system resources.

The memory, transmitter, and receiver may be connected to the processor by using the bus, or may be separately connected to the processor by using a dedicated connection cable.

Code corresponding to the method described in the following is built into a chip by designing programming for the processor, so that when the chip runs, the method shown in FIG. 2 can be performed.

FIG. 7 is a schematic structural diagram of a terminal according to an aspect of the present disclosure. As shown in FIG. 7, the terminal includes a processor 710, a storage element 720, and a transceiver apparatus 730. The transceiver apparatus 730 may be connected to an antenna. In a downlink direction, the transceiver apparatus 730 receives, by using the antenna, information sent by a base station, and sends the information to the processor 710 for processing. In an uplink direction, the processor 710 processes data of the terminal, and sends the data to the base station by using the transceiver apparatus 730.

The storage element 720 is configured to store program code that is used to implement the foregoing method aspect or each unit in the foregoing aspect shown in FIG. 3. The processor 710 invokes the program code, and performers operations in the foregoing method aspect, to implement each unit shown in FIG. 3.

For example, the storage element 720 is configured to store program code that instructs the processor 710 to perform a resource scheduling method.

The processor 710 is configured to invoke the program code that is stored in the storage element 720, to perform the following steps: determining that a service that needs to be carried meets a trigger condition of sending a resource scheduling request; and sending the resource scheduling request to the base station, where the resource scheduling request is used to request the base station to allocate an uplink resource to the terminal, and the resource scheduling request includes at least one of a priority indication of the service, a scheduling-free sending indication, a scheduling-free sending failure indication, a semi-persistent resource request, and a data buffer size indication.

Some or all of the foregoing units may be built in a chip of the terminal in a field programmable gate array (Field Programmable Gate Array, FPGA) form. Further, the units may be independently implemented, or may be integrated.

Same as that in the foregoing description, the processing element herein may be a general purpose processor, for example, a central processing unit (Central Processing Unit, CPU), or may be configured as one or more integrated circuits that perform the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA), or the like. The storage element may be a storage apparatus, or may be a general name for a plurality of storage elements.

In addition, a plurality of interfaces may be disposed on the processor, and are separately configured to connect to a peripheral device, or connect to an interface circuit that is connected to a peripheral device, for example, an interface configured to connect to a display screen, an interface configured to connect to a camera, an interface configured to connect to an audio processing element, and the like.

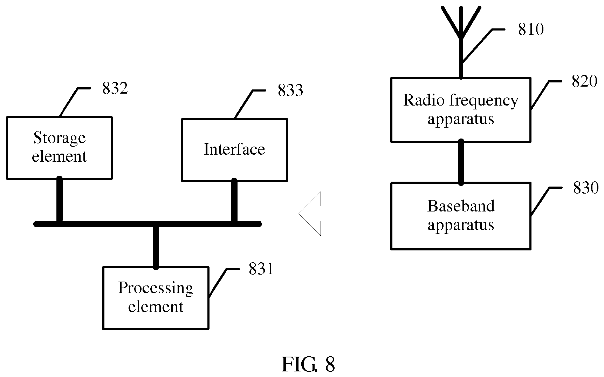

FIG. 8 is a schematic structural diagram of a base station according to an aspect of the present disclosure. As shown in FIG. 8, the base station includes an antenna 810, a radio frequency apparatus 820, and a baseband apparatus 830. The antenna 810 is connected to the radio frequency apparatus 820. In an uplink direction, the radio frequency apparatus 820 receives, by using the antenna 810, information sent by a terminal, and sends, to the baseband apparatus 830 for processing, the information sent by the terminal. In a downlink direction, the baseband apparatus 830 processes the information of the terminal, and sends the information to the radio frequency apparatus 820. The radio frequency apparatus 820 processes the information of the terminal, and sends the information to the terminal by using the antenna 810.

The foregoing apparatus 500 may be located in the baseband apparatus 830, and includes a processing element 831 and a storage element 832. The baseband apparatus 830 may include, for example, at least one baseband board, and a plurality of chips are disposed on the baseband board. As shown in FIG. 8, one chip is, for example, the processing element 831, and is connected to the storage element 832, so as to invoke a program in the storage element 832, to perform the operation shown in the foregoing method aspects. The baseband apparatus 830 may further include an interface 833, configured to exchange information with the radio frequency apparatus 820. The interface is, for example, a common public radio interface (common public radio interface, CPRI).

For another example, the processing unit 502 in FIG. 5 may be implemented by using a chip of the baseband apparatus 830, and the receiving unit 501 may be implemented by using another chip of the baseband apparatus 830; or the processing unit 502 and the receiving unit 501 are integrated into one chip of the baseband apparatus 830 for implementation; or functions of the processing unit 502 and the receiving unit 501 are stored in the storage element of the baseband apparatus 830 in a program code form, and are implemented through scheduling by a processing element of the baseband apparatus 830. Implementation of other units is similar to this.

Same as that in the foregoing description, the processing element herein may be a general purpose processor, for example, a central processing unit (Central Processing Unit, CPU), or may be configured as one or more integrated circuits that perform the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA), or the like.

The storage element may be a memory, or may be a general name for a plurality of storage elements.

Persons skilled in the art should understand that the aspects of the present disclosure may be provided as a method, a system, or a computer program product. Therefore, the present disclosure may use a form of hardware only aspects, software only aspects, or aspects with a combination of software and hardware. Moreover, the present disclosure may use a form of a computer program product that is implemented on one or more computer-usable storage media (including but not limited to a disk memory, a CD-ROM, an optical memory, and the like) that include computer-usable program code.

The present disclosure is described with reference to the flowcharts and/or block diagrams of the method, the device (system), and the computer program product according to the aspects of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The scope of protection shall be defined by the appended claims.

## Claims

1. A resource scheduling method in a licensed-assisted access network in which a primary component carrier in a licensed spectrum assists communication over a secondary component carrier in an unlicensed spectrum, the method comprising:
directly sending, by a terminal, data on the secondary component carrier in a scheduling-free sending manner; and
sending (22), by the terminal, a resource scheduling request to a base station on the primary component carrier when directly sending data on the secondary component carrier in the scheduling-free sending manner, wherein the resource scheduling request is used to request the base station to allocate an uplink resource to the terminal, and the resource scheduling request comprises a scheduling-free sending indication, wherein the scheduling-free sending indication comprises resource information used to indicate that the terminal performs scheduling-free sending;
wherein
the resource scheduling request and the data are simultaneously sent, or the resource scheduling request is sent before the data is sent, or the resource scheduling request is sent after the data is sent.

2. A resource scheduling method in a licensed-assisted access network in which a primary component carrier in a licensed spectrum assists communication over a secondary component carrier in an unlicensed spectrum, the method comprising:
receiving (22), by a base station, a resource scheduling request sent by a terminal on the primary component carrier, when directly sending data by the terminal on the secondary component carrier in a scheduling-free manner;
wherein the resource scheduling request is used to request the base station to allocate an uplink resource to the terminal, and the resource scheduling request comprises a scheduling-free sending indication, wherein the scheduling-free sending indication comprises resource information used to indicate that the terminal performs scheduling-free sending; and
allocating (23), by the base station, the uplink resource to the terminal based on the resource scheduling request,
wherein allocating (23), by the base station, the uplink resource to the terminal based on the resource scheduling request, comprises:
when the base station determines that the terminal and another terminal simultaneously send data by using a same scheduling-free resource, and a conflict occurs during data sending, allocating, by the base station, a licensed resource to the terminal based on a scheduling request in the scheduling-free sending indication, and the terminal sends data based on the licensed resource; and
when no conflict occurs during data sending, or the base station correctly receives data of one of the terminal and the another terminal, sending, by the base station, an ACK/NACK response without performing resource allocation and scheduling for data transmission for the one of the terminal and the another terminal.

3. A terminal adapted for use in a licensed-assisted access network in which a primary component carrier in a licensed spectrum assists communication over a secondary component carrier in an unlicensed spectrum, the terminal comprising means for:
directly sending data on the secondary component carrier in a scheduling-free sending manner; and
sending a resource scheduling request to a base station on the primary component carrier when directly sending data on the secondary component carrier in the scheduling-free sending manner, wherein the resource scheduling request is used to request the base station to allocate an uplink resource to the terminal, and the resource scheduling request comprises a scheduling-free sending indication, wherein the scheduling-free sending indication comprises resource information used to indicate that the terminal performs scheduling-free sending;
the resource scheduling request and the data are simultaneously sent, or the resource scheduling request is sent before the data is sent, or the resource scheduling request is sent after the data is sent.

4. A base station adapted for use in a licensed-assisted access network in which a primary component carrier in a licensed spectrum assists communication over a secondary component carrier in an unlicensed spectrum, the base station comprising means for:
receiving a resource scheduling request sent by a terminal on the primary component carrier, when directly sending data by the terminal on the secondary component carrier in a scheduling-free manner; wherein the resource scheduling request is used to request the base station to allocate an uplink resource to the terminal, and the resource scheduling request comprises a scheduling-free sending indication, wherein the scheduling-free sending indication comprises resource information used to indicate that the terminal performs scheduling-free sending; and
allocating the uplink resource to the terminal based on the resource scheduling request,
wherein allocating the uplink resource to the terminal based on the resource scheduling request, comprises:
when the base station determines that the terminal and another terminal simultaneously send data by using a same scheduling-free resource, and a conflict occurs during data sending, allocating, by the base station, a licensed resource to the terminal based on a scheduling request in the scheduling-free sending indication, and the terminal sends data based on the licensed resource; and
when no conflict occurs during data sending, or the base station correctly receives data of one of the terminal and the another terminal, sending, by the base station, an ACK/NACK response without performing resource allocation and scheduling for data transmission for the one of the terminal and the another terminal.

## Patentansprüche

1. Ressourcenplanungsverfahren in einem Licensed-Assisted-Access-Netzwerk, in dem ein primärer Komponententräger in einem lizenzierten Spektrum Kommunikation über einen sekundären Komponententräger in einem unlizenzierten Spektrum unterstützt, wobei das Verfahren Folgendes umfasst:
direktes Senden von Daten durch ein Endgerät auf dem sekundären Komponententräger in einer planungsfreien Sendeweise; und
Senden (22) einer Ressourcenplanungsanforderung an eine Basisstation auf dem primären Komponententräger durch das Endgerät, wenn Daten auf dem sekundären Komponententräger in der planungsfreien Sendeweise direkt gesendet werden, wobei die Ressourcenplanungsanforderung verwendet wird, um die Basisstation aufzufordern, dem Endgerät eine Uplink-Ressource zuzuweisen, und die Ressourcenplanungsanforderung eine Angabe für planungsfreies Senden umfasst, wobei die Angabe für planungsfreies Senden Ressourceninformationen umfasst, die verwendet werden, um anzugeben, dass das Endgerät planungsfreies Senden durchführt;
wobei
die Ressourcenplanungsanforderung und die Daten gleichzeitig gesendet werden, oder die Ressourcenplanungsanforderung gesendet wird bevor die Daten gesendet werden, oder die Ressourcenplanungsanforderung gesendet wird nachdem die Daten gesendet werden.

2. Ressourcenplanungsverfahren in einem Licensed-Assisted-Access-Netzwerk, in dem ein primärer Komponententräger in einem lizenzierten Spektrum Kommunikation über einen sekundären Komponententräger in einem unlizenzierten Spektrum unterstützt, wobei das Verfahren Folgendes umfasst:
Empfangen (22) einer Ressourcenplanungsanforderung, die durch ein Endgerät auf dem primären Komponententräger gesendet wurde, durch eine Basisstation,
wenn Daten durch das Endgerät auf dem sekundären Komponententräger in einer planungsfreien Sendeweise direkt gesendet werden;
wobei die Ressourcenplanungsanforderung verwendet wird, um die Basisstation aufzufordern, dem Endgerät eine Uplink-Ressource zuzuweisen, und die Ressourcenplanungsanforderung eine Angabe für planungsfreies Senden umfasst, wobei die Angabe für planungsfreies Senden Ressourceninformationen umfasst, die verwendet werden, um anzugeben, dass das Endgerät planungsfreies Senden durchführt; und
Zuweisen (23) der Uplink-Ressource durch die Basisstation an das Endgerät auf Grundlage der Ressourcenplanungsanforderung,
wobei das Zuweisen (23) der Uplink-Ressource durch die Basisstation an das Endgerät auf Grundlage der Ressourcenplanungsanforderung Folgendes umfasst:
wenn die Basisstation bestimmt, dass das Endgerät und ein weiteres Endgerät gleichzeitig Daten senden, indem eine gleiche planungsfreie Ressource verwendet wird, und beim Senden von Daten ein Konflikt auftritt, Zuweisen einer lizenzierten Ressource durch die Basisstation an das Endgerät auf Grundlage einer Planungsanforderung in der Angabe für planungsfreies Senden, und Senden von Daten durch das Endgerät auf Grundlage der lizenzierten Ressource; und
wenn beim Senden von Daten kein Konflikt auftritt oder die Basisstation Daten von einem von dem Endgerät und dem weiteren Endgerät korrekt empfängt, Senden einer ACK/NACK-Antwort durch die Basisstation, ohne eine Ressourcenzuweisung und Planung für eine Datenübertragung für das eine von dem Endgerät und dem weiteren Endgerät durchzuführen.

3. Endgerät geeignet zur Verwendung in einem Licensed-Assisted-Access-Netzwerk, in dem ein primärer Komponententräger in einem lizenzierten Spektrum Kommunikation über einen sekundären Komponententräger in einem unlizenzierten Spektrum unterstützt, wobei das Endgerät Mittel für Folgendes umfasst:
direktes Senden von Daten auf dem sekundären Komponententräger in einer planungsfreien Sendeweise; und
Senden einer Ressourcenplanungsanforderung an eine Basisstation auf dem primären Komponententräger, wenn Daten auf dem sekundären Komponententräger in der planungsfreien Sendeweise direkt gesendet werden, wobei die Ressourcenplanungsanforderung verwendet wird, um die Basisstation aufzufordern, dem Endgerät eine Uplink-Ressource zuzuweisen, und die Ressourcenplanungsanforderung eine Angabe für planungsfreies Senden umfasst, wobei die Angabe für planungsfreies Senden Ressourceninformationen umfasst, die verwendet werden, um anzugeben, dass das Endgerät planungsfreies Senden durchführt;
die Ressourcenplanungsanforderung und die Daten gleichzeitig gesendet werden, oder die Ressourcenplanungsanforderung gesendet wird bevor die Daten gesendet werden, oder die Ressourcenplanungsanforderung gesendet wird nachdem die Daten gesendet werden.

4. Basisstation geeignet zur Verwendung in einem Licensed-Assisted-Access-Netzwerk, in dem ein primärer Komponententräger in einem lizenzierten Spektrum Kommunikation über einen sekundären Komponententräger in einem unlizenzierten Spektrum unterstützt, wobei die Basisstation Mittel für Folgendes umfasst:
Empfangen einer durch ein Endgerät auf dem primären Komponententräger gesendeten Ressourcenplanungsanforderung, wenn Daten durch das Endgerät auf dem sekundären Komponententräger in einer planungsfreien Weise direkt gesendet werden; wobei die Ressourcenplanungsanforderung verwendet wird, um die Basisstation aufzufordern, dem Endgerät eine Uplink-Ressource zuzuweisen, und die Ressourcenplanungsanforderung eine Angabe für planungsfreies Senden umfasst, wobei die Angabe für planungsfreies Senden Ressourceninformationen umfasst, die verwendet werden, um anzugeben, dass das Endgerät planungsfreies Senden durchführt; und
Zuweisen der Uplink-Ressource an das Endgerät auf Grundlage der Ressourcenplanungsanforderung,
wobei das Zuweisen der Uplink-Ressource an das Endgerät auf Grundlage der Ressourcenplanungsanforderung Folgendes umfasst:
wenn die Basisstation bestimmt, dass das Endgerät und ein weiteres Endgerät gleichzeitig Daten senden, indem eine gleiche planungsfreie Ressource verwendet wird, und beim Senden von Daten ein Konflikt auftritt, Zuweisen einer lizenzierten Ressource durch die Basisstation an das Endgerät auf Grundlage einer Planungsanforderung in der Angabe für planungsfreies Senden, und Senden von Daten durch das Endgerät auf Grundlage der lizenzierten Ressource; und
wenn beim Senden von Daten kein Konflikt auftritt oder die Basisstation Daten von einem von dem Endgerät und dem weiteren Endgerät korrekt empfängt, Senden einer ACK/NACK-Antwort durch die Basisstation, ohne eine Ressourcenzuweisung und Planung für eine Datenübertragung für das eine von dem Endgerät und dem weiteren Endgerät durchzuführen.

## Revendications

1. Procédé de planification de ressource dans un réseau d'accès assisté par licence dans lequel une porteuse composante principale dans un spectre sous licence assiste la communication sur une porteuse composante secondaire dans un spectre sans licence, le procédé comprenant :
l'envoi direct, par un terminal, de données sur la porteuse composante secondaire selon une manière d'envoi sans planification ; et
l'envoi (22), par le terminal, d'une demande de planification de ressource à une station de base sur la porteuse composante principal lors de l'envoi direct de données sur la porteuse composante secondaire selon une manière d'envoi sans planification, dans lequel la demande de planification de ressource est utilisée pour demander à la station de base d'allouer une ressource de liaison montante au terminal, et la demande de planification de ressource comprend une indication d'envoi sans planification, dans lequel l'indication d'envoi sans planification comprend des informations de ressource utilisées pour indiquer que le terminal réalise un envoi sans planification ;
dans lequel
la demande de planification de ressource et les données sont envoyées simultanément, ou la demande de planification de ressource est envoyée avant que les données soient envoyées, ou la demande de planification de ressource est envoyée après que les données sont envoyées.

2. Procédé de planification de ressource dans un réseau d'accès assisté par licence dans lequel une porteuse composante principale dans un spectre sous licence assiste la communication sur une porteuse composante secondaire dans un spectre sans licence, le procédé comprenant :
la réception (22), par une station de base, d'une demande de planification de ressource envoyée par un terminal sur la porteuse composante principale,
lors de l'envoi direct de données par le terminal sur la porteuse composante secondaire selon une manière sans planification ;
dans lequel la demande de planification de ressource est utilisée pour demander à la station de base d'allouer une ressource de liaison montante au terminal, et la demande de planification de ressource comprend une indication d'envoi sans planification, dans lequel l'indication d'envoi sans planification comprend des informations de ressource utilisées pour indiquer que le terminal réalise un envoi sans planification ; et
l'allocation (23), par la station de base, de la ressource de liaison montante au terminal sur la base de la demande de planification de ressource,
dans lequel l'allocation (23), par la station de base, de la ressource de liaison montante au terminal sur la base de la demande de planification de ressource, comprend :
lorsque la station de base détermine que le terminal et un autre terminal envoient simultanément des données à l'aide d'une même ressource sans planification, et qu'un conflit survient lors de l'envoi de données, l'allocation, par la station de base, d'une ressource sous licence au terminal sur la base d'une demande de planification dans l'indication d'envoi sans planification, et le terminal envoie des données sur la base de la ressource sous licence ; et
lorsqu'aucun conflit ne survient lors de l'envoi de données, ou que la station de base reçoit correctement des données de l'un du terminal et de l'autre terminal, l'envoi, par la station de base, d'une réponse ACK/NACK sans réaliser d'allocation de ressources ni de planification pour la transmission de données pour l'un du terminal et de l'autre terminal.

3. Terminal adapté à une utilisation dans un réseau d'accès assisté par licence dans lequel une porteuse composante principale dans un spectre sous licence assiste la communication sur une porteuse composante secondaire dans un spectre sans licence, le terminal comprenant des moyens pour :
l'envoi direct de données sur la porteuse composante secondaire selon une manière d'envoi sans planification ; et
l'envoi d'une demande de planification de ressource à une station de base sur la porteuse composante principal lors de l'envoi direct de données sur la porteuse composante secondaire selon une manière d'envoi sans planification, dans lequel la demande de planification de ressource est utilisée pour demander à la station de base d'allouer une ressource de liaison montante au terminal, et la demande de planification de ressource comprend une indication d'envoi sans planification, dans lequel l'indication d'envoi sans planification comprend des informations de ressource utilisées pour indiquer que le terminal réalise un envoi sans planification ;
la demande de planification de ressource et les données sont envoyées simultanément, ou la demande de planification de ressource est envoyée avant que les données soient envoyées, ou la demande de planification de ressource est envoyée après que les données sont envoyées.

4. Station de base adaptée à une utilisation dans un réseau d'accès assisté par licence dans lequel une porteuse composante principale dans un spectre sous licence assiste la communication sur une porteuse composante secondaire dans un spectre sans licence, la station de base comprenant des moyens pour :
la réception d'une demande de planification de ressource envoyée par un terminal sur la porteuse composante principal, lors de l'envoi direct de données par le terminal sur la porteuse composante secondaire selon une manière sans planification ;
dans lequel la demande de planification de ressource est utilisée pour demander à la station de base d'allouer une ressource de liaison montante au terminal, et la demande de planification de ressource comprend une indication d'envoi sans planification, dans lequel l'indication d'envoi sans planification comprend des informations de ressource utilisées pour indiquer que le terminal réalise un envoi sans planification ; et
l'allocation de la ressource de liaison montante au terminal sur la base de la demande de planification de ressource,
dans lequel l'allocation de la ressource de liaison montante au terminal sur la base de la demande de planification de ressource, comprend :
lorsque la station de base détermine que le terminal et un autre terminal envoient simultanément des données à l'aide d'une même ressource sans planification, et qu'un conflit survient lors de l'envoi de données, l'allocation, par la station de base, d'une ressource sous licence au terminal sur la base d'une demande de planification dans l'indication d'envoi sans planification, et le terminal envoie des données sur la base de la ressource sous licence ; et
lorsqu'aucun conflit ne survient lors de l'envoi de données, ou que la station de base reçoit correctement des données de l'un du terminal et de l'autre terminal, l'envoi, par la station de base, d'une réponse ACK/NACK sans réaliser d'allocation de ressources ni de planification pour la transmission de données pour l'un du terminal et de l'autre terminal.
